# FASCICULE DE BREVET EUROPEEN

(11) **EP 1 842 446 B1**
(45) Date de publication et mention de la délivrance du brevet: **14.09.2011**
(21) Numéro de dépôt: 07300918.5
(22) Date de dépôt: 03.04.2007
(51) Int. Cl.: A45D 19/00, A45D 40/00, G01F 19/00, A47J 43/28

(54) **Dispositif de prélèvement comportant une cuillère doseuse.**
Entnahmevorrichtung, die einen Dosierlöffel umfasst
Sampling device comprising a measuring scoop

(30) Priorité: 07.04.2006 FR 0651262
(43) Date de publication de la demande: 10.10.2007
(73) Titulaire: L'Oréal, 75008 Paris (FR)
(72) Inventeur: De Laforcade, Vincent, 78120 Rambouillet (FR)
(74) Mandataire: Tanty, François

(56) Documents cités:
- EP-A- 1 371 314
- DE-C1- 19 736 078
- JP-A- 7 286 885
- US-A- 2 756 698
- US-A- 6 162 039
- US-A1- 2005 160 807
- US-B1- 6 408 521

## Description

La présente invention a pour objet un dispositif de prélèvement comportant une cuillère doseuse et un ensemble de conditionnement et de distribution comportant au moins un produit à prélever au moyen d'un tel dispositif.

On connaît par la demande internationale WO 2004/069017 une cuillère à glace comportant un cadre annulaire rigide et un fond ayant une forme de calotte, réalisé en un matériau flexible. La glace contenue dans la cuillère peut être expulsée en déformant le fond souple avec le doigt.

La demande EP 1 371 314-A1 décrit une cuillère ayant une structure analogue à celle décrite dans la demande WO 2004/069017, avec en plus un levier agissant sur le fond souple.

On connaît également par la demande EP 1 516 539-A1 une cuillère à glace comportant deux éléments montés de manière pivotante l'un par rapport à l'autre, un ressort s'interposant entre ces deux éléments pour les écarter. L'un des éléments comporte à une extrémité un cadre et l'autre élément une coupelle destinée à former avec le cadre une cavité pour prélever de la glace.

Les brevets US 4 392 806, US 2 756 698 et US 4 161 381 décrivent chacun une cuillère à glace comportant une coupelle pourvue d'une languette de fond ayant une forme arrondie et pouvant pivoter pour expulser la glace.

Le brevet US 2 660 784 décrit une cuillère de dosage comportant une cavité de prélèvement ayant, dans son fond, une languette pivotante. Cette dernière est munie d'une portion formant ressort et sert à expulser le produit.

Le brevet US 6 162 039 décrit un dispositif pour prélever un produit alimentaire, comportant une cuillère et une plaque disposée au fond de celle-ci pour en expulser le contenu.

La demande de brevet US 2005/160807 décrit un dispositif comportant une poignée et une cuillère de dosage comportant une cavité de prélèvement ayant, dans son fond, une plaque capable de pivoter sous l'action d'un bouton-poussoir situé sur la poignée.

La demande de brevet JP 07 286885 décrit une cuillère ayant une structure proche de celle décrite dans la demande US 2005/160807. Elle présente deux variantes : dans la première, l'utilisateur entraîne en rotation au niveau de la poignée un élément duquel est solidaire le fond de la cavité ; dans la deuxième, l'utilisateur déplace un bouton-poussoir au niveau de la poignée, entraînant une courroie exerçant une poussée sur le fond de la cavité.

La demande de brevet DE 197 36 078 décrit un dispositif de dosage, comportant un récipient de dosage et une paroi latérale mobile par rapport au récipient de dosage.

Le brevet US 6 408 521 décrit un dispositif de prélèvement d'un produit alimentaire, comportant une cuillère à l'une de ses extrémités et une cuillère doseuse à l'autre de ses extrémités. Le produit alimentaire peut circuler dans le manche d'une extrémité à l'autre du dispositif.

Les dispositifs connus pour le prélèvement et l'extraction d'une boule de glace ne conviennent pas nécessairement à des produits non alimentaires présentant des adhérence et consistance autres et, de plus, ne visent pas à réaliser un dosage précis. En outre, certains au moins de ces dispositifs peuvent s'avérer relativement coûteux à réaliser.

Par ailleurs, dans le domaine des produits capillaires, et notamment de coloration ou de décoloration, les pâtes de décoloration, notamment celles obtenues par extrusion à haute pression, occupent une place d'importance croissante en remplacement de formules plus liquides.

Ces pâtes, qui sont habituellement utilisées mélangées avec un révélateur dans des proportions prédéfinies, peuvent présenter une consistance assez ferme et avoir tendance à adhérer facilement aux parois des cuillères utilisées pour leur prélèvement, ce qui nuit à la précision du dosage et complique l'opération de mélange.

L'invention vise notamment à proposer un nouveau dispositif de prélèvement permettant de prélever et de distribuer aisément une dose d'un produit pâteux tel que par exemple une pâte de décoloration.

L'invention a également pour but, selon un autre de ses aspects, de proposer un dispositif de prélèvement capable d'être fabriqué à un coût compatible avec sa diffusion à une large échelle, notamment en accompagnement de produits capillaires.

L'invention a pour objet, selon l'un de ses aspects, un dispositif de prélèvement d'un produit, comportant au moins une cuillère doseuse. Cette dernière comporte :
- un cadre,
- un volet pivotant relativement au cadre, définissant avec celui-ci, dans une première position, le fond d'une cavité servant au prélèvement du produit.

Le volet peut être plan, c'est-à-dire présenter une surface plane sur chacune de ses faces, l'une de ses faces définissant le fond de la cavité et l'autre étant opposée à la cavité.

Le volet peut être dépourvu de matériau souple à sa périphérie, notamment dans les zones pouvant être en contact avec le cadre. Il peut par exemple être dépourvu de joint d'étanchéité à sa périphérie.

La face du volet opposée à la cavité peut être totalement libre, notamment non reliée à un quelconque mécanisme. De manière plus générale, le volet peut être totalement libre et n'interagir avec aucun mécanisme.

Le volet peut pivoter relativement au cadre en n'étant relié à celui-ci que par l'un de ses côtés, l'angle de pivotement maximal pouvant par exemple être inférieur ou égal à 220°.

Le cadre peut être agencé de manière à permettre à un utilisateur d'exercer une poussée sur le volet du côté opposé à la cavité, afin d'en diminuer le volume. Le cadre peut notamment être réalisé de manière à ce que le volet puisse atteindre une deuxième position dans laquelle le volume de la cavité est sensiblement nul.

L'angle de pivotement du volet relativement au cadre entre la première et la deuxième position du volet, peut notamment être inférieur ou égal à environ 40°.

La deuxième position du volet correspond à une position dans laquelle l'une des faces du volet définit le fond d'une cavité d'un volume sensiblement égal au volume de la cavité définie par le volet dans la première position.

La cuillère doseuse permet de prélever une quantité prédéfinie de produit lorsque le volet est dans la première position, par exemple par prélèvement direct à l'aide de la cuillère doseuse dans un récipient contenant le produit, en raclant le cas échéant le bord supérieur du cadre contre un récipient ou à l'aide d'une spatule pour enlever l'excès de produit.

L'invention permet d'éjecter sensiblement la totalité du produit contenu dans la cavité ainsi remplie en faisant pivoter le volet de la première position vers la deuxième position. Une fois le volet dans la deuxième position, l'utilisateur peut racler à nouveau le cas échéant le bord supérieur du cadre afin de vider sensiblement totalement la cuillère.

L'ouverture par laquelle le produit est placé dans la cavité et l'ouverture par laquelle le produit est éjecté de la cavité sont les mêmes.

L'invention permet ainsi de prélever et de distribuer aisément une dose relativement précise de produit, sans rendre très difficile le nettoyage de la cuillère doseuse. Ceci est avantageux dans le domaine capillaire, lorsque la pâte prélevée doit être mélangée de manière extemporanée à un révélateur ou à un autre composé dans des proportions bien définies, mais l'invention peut trouver d'autres applications dans le domaine de la cosmétique ou de la pharmacie, entre autres.

L'extraction du produit contenu dans la cavité s'effectue manuellement en poussant avec un doigt sur le volet, le dispositif selon l'invention peut, dans certains exemples de mise en oeuvre au moins, présenter une structure relativement simple et économique à réaliser, à la différence par exemple de dispositifs plus complexes comportant un organe de rappel élastique tel qu'un ressort ou un levier articulé.

Par ailleurs, l'utilisateur peut faire pivoter le volet sans contact direct avec le produit contenu dans la cavité, ce qui réduit le risque d'éventuelles salissures et/ou pollution du produit par des impuretés transportées par les doigts.

De préférence, le volet présente en regard de la cavité une face sensiblement plane, ce qui permet de le racler plus facilement au contact par exemple du rebord d'un récipient ou avec une spatule, lorsqu'il est dans la deuxième position.

Dans un exemple de mise en oeuvre de l'invention, le volet pivote relativement au cadre autour d'un axe de pivotement et le cadre présente au moins une portion de sa surface intérieure qui est de révolution, par exemple en forme de secteur cylindrique, de génératrice parallèle à l'axe de pivotement et de directrice en arc de cercle centré sur l'axe de pivotement. Le volet peut pivoter sans action de rappel élastique, continuant à occuper la position dans laquelle le laisse l'utilisateur, mais en variante le volet peut être soumis à une certaine action de rappel élastique, liée par exemple à la façon dont l'articulation est réalisée.

Avantageusement, le volet occupe sensiblement toute la section intérieure du cadre lorsqu'il est entre les première et deuxième positions, ce qui réduit le risque de non-éjection de traces de produit adhérant au cadre.

Dans un exemple de mise en oeuvre de l'invention, le volet présente un bord libre dont au moins une portion s'applique sur le cadre lorsque le volet est entre les première et deuxième positions. Cette portion s'étend par exemple au moins le long du bord distal du volet, opposé à l'axe de pivotement précité. Le bord libre du volet peut également comporter, le cas échéant, deux portions latérales s'appliquant sur le cadre lorsque le volet est entre les première et deuxième positions.

Le volet peut présenter une forme sensiblement polygonale, par exemple rectangulaire, carrée, triangulaire ou trapézoïdale, ou circulaire, entre autres, le cadre présentant une forme adaptée à celle du volet.

Le dispositif comportant un manche, l'axe de pivotement du volet peut être perpendiculaire à l'axe longitudinal du manche.

Le bord supérieur du cadre, qui constitue le bord d'attaque, peut être situé dans un plan et le manche peut être généralement aplati selon ce plan.

Le volet peut être relié au manche par une charnière film. Ainsi, le volet peut être réalisé par moulage d'un seul tenant avec l'un au moins du cadre et du manche du dispositif. Le volet et une portion au moins du cadre peuvent être réalisés en un matériau plastique, notamment en une polyoléfine, par exemple du polypropylène.

Dans un exemple de mise en oeuvre de l'invention, le cadre est ajouré, ce qui permet à l'utilisateur d'exercer sa poussée en appuyant directement sur le volet, sur la face de celui-ci opposée à la cavité, à travers l'ajour du cadre.

Le cadre peut être réalisé en un matériau unique, notamment un matériau relativement rigide tel que du polypropylène. Le cas échéant, la cuillère doseuse peut être réalisée entièrement en un unique matériau, notamment un matériau thermoplastique, par exemple du polypropylène. La cuillère peut ainsi être réalisée sans élastomère, ce qui peut être avantageux vis-à-vis de certains produits riches en solvants, par exemple certaines pâtes de décoloration, qui peuvent s'avérer incompatibles avec de nombreux élastomères.

Dans un autre exemple de mise en oeuvre de l'invention, le cadre comporte une membrane élastiquement déformable qui peut en fermer le fond.

Pour faire pivoter le volet de la première position vers la deuxième position, l'utilisateur exerce alors une poussée sur le volet par l'intermédiaire de la membrane, ce qui peut réduire encore le risque de contact du ou des doigts de l'utilisateur avec le produit contenu dans la cavité.

Le volet peut être agencé pour pivoter au-delà de la deuxième position, de façon à faciliter le nettoyage de la cuillère doseuse.

Le cadre peut comporter au moins deux ailes, lesquelles peuvent être sensiblement parallèles, et la membrane élastiquement déformable peut définir au moins la portion inférieure de chacune de ces ailes. Cela peut permettre à l'utilisateur d'exercer une poussée sur le volet sur une distance plus grande.

Le cadre peut comporter une portion supérieure rigide, de manière à former un bord d'attaque garantissant une pénétration satisfaisante de la cuillère dans le produit à prélever.

La membrane élastiquement déformable peut être réalisée par surmoulage d'un matériau, notamment un élastomère, sur la portion rigide du cadre. La membrane peut être réalisée par exemple à partir de polyéthylène téréphtalate (PET), d'EPDM, de SANTOPRÈNE® ou de caoutchouc, cette liste n'étant pas limitative.

Des reliefs d'accrochage peuvent être prévus à l'interface entre la membrane élastiquement déformable et la portion rigide du cadre, pour améliorer le maintien de la membrane sur cette portion.

Le débattement angulaire du volet peut aller jusqu'à 90° ou plus lors de l'utilisation.

Dans un exemple de mise en oeuvre de l'invention, le cadre est agencé de manière à ce que le volet puisse pivoter d'un angle compris entre 30° et 50°, étant par exemple voisin de 40°, lorsqu'il passe de la première position à la deuxième position.

Avantageusement, le cadre comporte au moins une première butée contre laquelle le volet s'applique lorsque celui-ci est dans l'une des première et deuxième positions.

Le cadre peut notamment comporter une butée pour immobiliser le volet dans la première position, lors du prélèvement du produit. Cette butée est par exemple réalisée sur la surface intérieure de la paroi distale du cadre, opposée à l'axe de pivotement.

Une deuxième butée peut servir à empêcher le volet de dépasser la deuxième position, en éloignement de la première position. Le volet peut être maintenu en place dans la deuxième position contre cette butée par un doigt par exemple lorsque la cuillère est raclée sur le rebord d'un récipient.

Les butées précitées peuvent être réalisées, le cas échéant, de manière à pouvoir être franchies par le volet lorsqu'une force suffisante est exercée dessus. Cela peut permettre le moulage du volet dans une configuration autre que celles prises par le volet lors du passage de la première à la deuxième position. La deuxième butée peut notamment être réalisée avec un chanfrein facilitant le passage de la configuration de moulage à la première position. Le volet peut également être réalisé avec sur son bord distal un chanfrein facilitant le franchissement de la deuxième butée.

Dans un exemple de mise en oeuvre de l'invention, le cadre comporte un ou plusieurs reliefs agencés pour générer au moins un point dur, prévenant l'utilisateur du passage ou de l'arrivée du volet dans l'une des première et deuxième positions.

Dans un exemple de mise en oeuvre de l'invention, le manche est creux, ce qui peut réduire le coût matière et contribuer à la sauvegarde de l'environnement.

Le manche peut notamment comporter deux portions assemblées, lesquelles peuvent être reliées entre elles par une charnière film. Celle-ci peut se situer sur un côté latéral du manche afin de faciliter son démoulage. En variante, la charnière film peut s'étendre à l'une des extrémités longitudinales du manche.

Le manche peut comporter un revêtement d'un matériau, notamment d'un élastomère, surmoulé sur les deux portions du manche afin de les maintenir assemblées. Dans ce cas, des reliefs peuvent être réalisés sur les portions du manche pour contribuer à leur assemblage provisoire. Ces reliefs peuvent coopérer afin par exemple de permettre la fixation par encliquetage d'une portion sur l'autre.

Les deux portions du manche peuvent encore être rendues solidaires par tout autre moyen, par exemple par collage ou soudage.

La cuillère doseuse peut être disposée à une première extrémité du manche du dispositif et celui-ci peut comporter en outre, à une deuxième extrémité opposée à la première, une autre cuillère doseuse. Les cuillères doseuses peuvent être différentes, la cuillère doseuse supplémentaire pouvant par exemple définir une cavité de prélèvement de volume constant, sans volet pivotant. La deuxième cuillère peut servir, par exemple, à prélever un produit liquide à mélanger au produit pâteux prélevé avec la première cuillère. En variante, les deux cuillères doseuses peuvent présenter chacune un volet pivotant, comme décrit ci-dessus.

L'invention a encore pour objet, selon un autre de ses aspects, un ensemble comportant :
- au moins un produit, notamment non alimentaire, par exemple cosmétique,
- un dispositif de prélèvement tel que défini ci-dessus.

Le produit est par exemple un produit de décoloration capillaire, de consistance pâteuse, destiné à être mélangé de manière extemporanée à un révélateur. Ce produit peut être conditionné dans un pot.

L'invention a encore pour objet, selon un autre de ses aspects, un procédé de fabrication d'un dispositif tel que défini ci-dessus, le procédé comportant l'étape suivante :
- réaliser par moulage le volet et au moins une portion du cadre, le volet étant moulé dans une configuration dans laquelle il s'étend à l'extérieur du cadre, par exemple partiellement au-dessus du bord d'attaque du cadre.

Dans ce procédé, le cadre peut être réalisé par moulage de matière avec un manche. Ce dernier peut comprendre deux portions assemblées l'une sur l'autre après l'opération de moulage.

Le procédé peut encore comprendre le surmoulage d'une membrane en élastomère, laquelle peut fermer le cadre et/ou recouvrir au moins partiellement le manche.

L'invention a encore pour objet, selon un autre de ses aspects, un procédé pour prélever un produit, notamment pâteux, comportant les étapes successives suivantes :
- prélever le produit à l'aide d'un dispositif de prélèvement tel que défini ci-dessus,
- faire pivoter le volet vers la deuxième position en vue d'extraire le produit.

Le procédé peut encore comporter l'étape suivante :
- lorsque le volet est dans la deuxième position, le racler au contact d'un objet, notamment du rebord d'un récipient, en vue d'enlever le produit encore présent dessus, le cas échéant.

L'invention a encore pour objet, selon un autre de ses aspects, un dispositif pour le prélèvement d'un produit, comportant :
- une cuillère doseuse, laquelle comprend au moins :
   - un cadre comprenant une membrane souple en forme de calotte,
   - un volet pivotant relativement au cadre et pouvant définir avec ce dernier une cavité pour le prélèvement du produit, la membrane étant agencée pour permettre à l'utilisateur d'exercer une poussée sur le volet à travers la membrane, de façon à réduire le volume de la cavité.

La présente invention pourra être mieux comprise à la lecture de la description détaillée qui va suivre, d'exemples de mise en oeuvre non limitatifs de celle-ci, et à l'examen du dessin annexé, sur lequel :
- la figure 1 représente, schématiquement et partiellement, un dispositif selon l'invention, le volet étant dans une première position permettant de prélever le produit avec la cuillère doseuse,
- la figure 2 représente, schématiquement et partiellement, le dispositif de la figure 1, le volet étant dans une deuxième position, d'extraction du produit prélevé,
- la figure 3 représente, schématiquement et partiellement, le dispositif de la figure 1 dans une configuration de moulage,
- les figures 4 et 5 illustrent, schématiquement et partiellement, en coupe, des exemples de butées pouvant être réalisées sur la cuillère des figures 1 à 3, et
- la figure 6 représente, schématiquement et partiellement, un dispositif de prélèvement conforme à un autre exemple de mise en oeuvre de l'invention, avant mise en place du volet dans une configuration d'utilisation,
- la figure 7 représente en vue de dessus un autre exemple de dispositif selon l'invention,
- la figure 8 est une vue de côté du dispositif de la figure 7,
- la figure 9 est une vue selon la flèche IX de la figure 8,
- la figure 10 est une vue selon la flèche X de la figure 8,
- la figure 11 est une section transversale selon XI-XI de la figure 7,
- la figure 12 est une section transversale selon XII-XII de la figure 8,
- la figure 13 est une section transversale selon XIII-XIII de la figure 8,
- la figure 14 représente en vue de face un autre exemple de dispositif selon l'invention,
- la figure 15 est une vue de côté du dispositif de la figure 14, et
- la figure 16 représente de manière schématique en perspective le dispositif des figures 14 et 15.

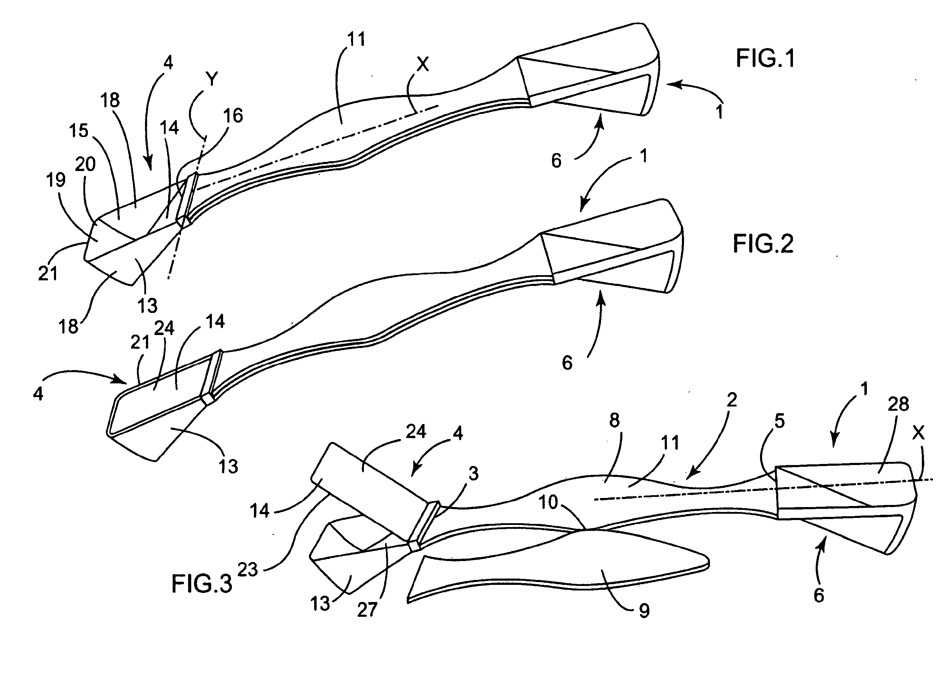

On a représenté sur les figures 1 à 3 un dispositif de prélèvement 1, comportant un manche 2 s'étendant suivant un axe longitudinal X, muni à une première extrémité 3 d'une cuillère doseuse 4 et à une autre extrémité 5 d'une deuxième cuillère doseuse 6.

Le manche 2 présente une forme ergonomique avec par exemple une zone centrale 11 élargie par rapport à ses extrémités 3 et 5.

La cuillère 4 comporte un cadre 13 et un volet 14 pivotant relativement au cadre 13 autour d'un axe géométrique Y perpendiculaire à l'axe X.

Le volet 14 définit avec le cadre 13, dans une première position angulaire, le fond d'une cavité 15 servant au prélèvement d'une dose de produit, comme illustré sur la figure 2.

Le volume maximal de la cavité 15 est par exemple de 15 ml.

Le cadre 13 comporte dans l'exemple considéré deux ailes latérales 18 sensiblement parallèles qui se raccordent à une première extrémité au manche 2 et sont reliées à une deuxième extrémité opposée à la première par une paroi distale 19.

Cette dernière définit une surface intérieure 20, de révolution, en forme de secteur cylindrique de génératrice parallèle à l'axe Y et de directrice en arc de cercle centré sur l'axe Y.

Le cadre 13 présente un bord supérieur 21 définissant le bord d'attaque de la cuillère 4 pour le prélèvement du produit.

Le manche 2 présente une forme générale aplatie et le volet 14 est relié au manche 2 par l'intermédiaire d'une charnière film 16. Le volet 14 présente, dans l'exemple considéré, lorsqu'observé de face, une forme sensiblement rectangulaire. La face supérieure 24 du volet 14, qui est en regard de la cavité 15, est sensiblement plane et occupe sensiblement toute la section intérieure du cadre 13.

Le volet 14 présente un bord libre 23 qui s'applique sur la surface intérieure 20 du cadre 13 lorsque le volet 14 passe de la première position, illustrée sur la figure 2, à la deuxième position illustrée sur la figure 3, dans laquelle le volume de la cavité 15 est sensiblement nul, le volet 14 venant alors sensiblement à affleurement du bord d'attaque 21.

Dans l'exemple considéré, le cadre 13 définit un ajour 27, comme illustré sur la figure 1, ce qui permet à l'utilisateur d'exercer à l'aide de son doigt une poussée sur le volet 14 du côté opposé à la cavité 15, afin de le faire pivoter de la première position vers la deuxième position.

La deuxième cuillère doseuse 6 définit une cavité 28 de volume constant. Dans un exemple non illustré, la cuillère doseuse 6 peut être analogue à la première cuillère 4, étant pourvue également d'un volet pivotant, les cuillères 4 et 6 pouvant présenter des contenances différentes ou identiques.

Le manche 2 est creux, étant formé par l'assemblage de deux portions 8 et 9 superposées, reliées par un côté par une charnière film 10, laquelle peut se situer sensiblement à mi-longueur du manche 2.

Le manche 2 peut être moulé avec les portions 8 et 9 disposées côte à côte, comme illustré à la figure 3, puis celles-ci sont rabattues l'une contre l'autre. Les portions 8 et 9 peuvent alors être maintenues assemblées de diverses façons, par exemple par collage, soudage ou encliquetage, voire par surmoulage d'un autre matériau, comme cela sera exemplifié plus loin.

Dans l'exemple considéré, le dispositif 1 est réalisé d'un seul tenant par moulage d'une matière thermoplastique, par exemple du polypropylène.

Dans la configuration de moulage, le volet 14 s'étend à l'extérieur du cadre 13. Cela peut faciliter le démoulage du dispositif 1.

Le démoulage du volet 14 peut s'effectuer en deux temps, le démoulage de la face supérieure du volet libérant un espace pour le pivotement du volet lors du démoulage ultérieur de la face du volet 14 tournée vers la cavité 15 et du cadre.

Le cadre 13 peut comporter une ou plusieurs butées sur laquelle ou lesquelles le volet 14 s'applique lorsque celui-ci est dans l'une des première et deuxième positions.

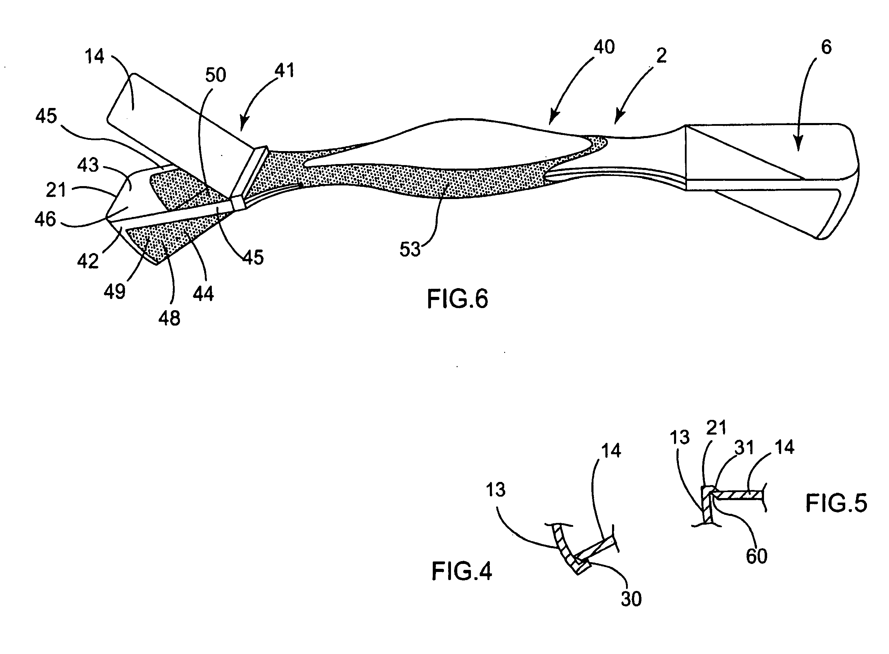

Le cadre 13 peut notamment comporter une première butée 30 formée par un retour de la paroi distale 19 du côté opposé au bord d'attaque 21, comme illustré sur la figure 4.

Le cadre 13 peut en outre comporter, à proximité de son bord d'attaque 21, une deuxième butée 31 sur laquelle le volet 14 vient en appui lorsque celui-ci atteint la deuxième position, comme illustré sur la figure 5.

La butée 31 peut présenter une forme chanfreinée, permettant au volet 14 de la franchir plus facilement par déformation élastique lorsque le volet 14 passe de la configuration de moulage à la configuration d'utilisation.

Le bord distal du volet 14 peut également présenter un chanfrein 60 sur sa face intérieure afin d'opposer une résistance moindre au franchissement de la deuxième butée 31 pour gagner la première position.

Au moins un relief peut être agencé pour générer une sensation de point dur à son franchissement par le volet 14, avertissant tactilement l'utilisateur de l'arrivée du volet dans la deuxième position par exemple. Le franchissement de la butée peut s'accompagner de l'émission d'un clic sonore, le cas échéant. Le point dur peut être formé par un bossage formant saillie sur la surface intérieure du cadre, par exemple sur sa paroi distale 19.

Les butées 30 et 31 peuvent être remplacées par tout autre relief capable de générer un point dur et/ou d'immobiliser le volet 14, voire être supprimées l'une et/ou l'autre.

Le dispositif 1 peut être utilisé de la manière suivante.

Le volet 14 est amené dans la première position puis une dose de produit est prélevée avec la cuillère doseuse 4.

Une fois la cavité 15 remplie, il est possible de racler le bord d'attaque 21 de manière à éliminer le produit présent en excès en dehors de la cavité 15.

Ensuite, l'utilisateur exerce une poussée sur le volet 14, à travers l'ajour 27, afin de faire pivoter le volet 14 de la première position vers la deuxième position et éjecter le produit.

Le produit adhérant encore éventuellement au volet 14 peut être enlevé par exemple en raclant la cuillère 4 sur le rebord d'un récipient. Le volet 14 peut alors être maintenu dans la deuxième position, en appui contre la butée 31, par le doigt.

La dose de produit ainsi prélevée peut être mélangée à un autre produit, lequel peut avoir été prélevé avec la deuxième cuillère doseuse 6, le cas échéant. Il peut s'agir par exemple d'un oxydant à mélanger de manière extemporanée avec le produit prélevé au moyen de la première cuillère 4.

Bien entendu, le dispositif 1 peut, si on le souhaite, être dépourvu de la cuillère doseuse 6.

On a représenté sur la figure 6 un dispositif de prélèvement 40 comportant, à l'instar du dispositif 1, un manche 2 avec, à une extrémité, une cuillère doseuse 6 et, à l'autre extrémité, une cuillère doseuse 41.

Cette dernière comporte un cadre 42 comprenant une portion rigide 43 et une membrane élastiquement déformable 44, en forme de calotte.

La portion rigide 43 définit le bord d'attaque 21 de la cuillère 41 et comporte deux bras 45 sensiblement parallèles, se raccordant au manche 2, et une paroi distale 46 reliant les bras 45 du côté opposé au manche 2.

La membrane 44 forme la portion inférieure 48 des ailes 49 du cadre et ferme inférieurement celui-ci.

La portion rigide 43 précitée peut être réalisée d'un seul tenant par moulage avec le manche 2 et le volet 14, dans la même matière thermoplastique.

La membrane 44 peut être réalisée par exemple par surmoulage d'un élastomère sur la portion rigide 43, par exemple en polyéthylène téréphtalate souple, en EPDM, SANTOPRÈNE® ou caoutchouc.

Des reliefs d'accrochage peuvent être prévus sur la portion rigide 43 afin de renforcer l'accrochage de la membrane 44 sur celle-ci.

Dans cet exemple, le manche 2 peut être réalisé à partir de deux portions 8 et 9, comme décrit en référence à la figure 1, lesquelles peuvent être maintenues ensemble par un revêtement 53 d'un même matériau que la membrane 44 et injecté en même temps que celle-ci.

Le dispositif 40 peut s'utiliser de la manière suivante.

Après avoir prélevé du produit avec la cuillère 41, l'utilisateur exerce une poussée sur le volet 14 en appuyant sur la membrane 44, de manière à faire pivoter le volet 14 de la première position vers la deuxième position. Le produit peut ensuite être extrait de la cuillère 41 comme décrit précédemment.

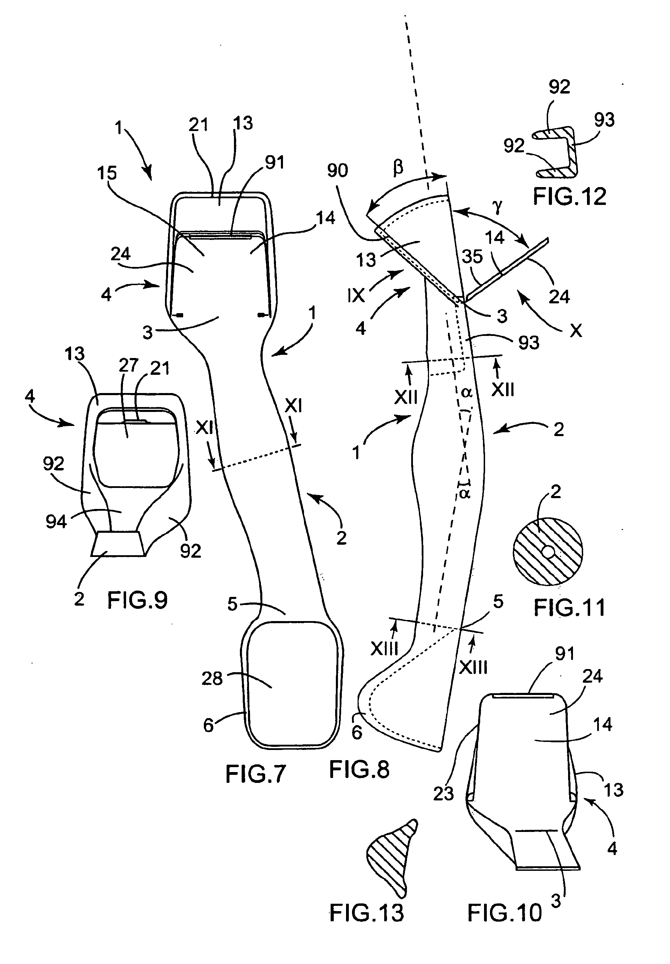

On a représenté aux figures 7 à 13 un autre exemple de réalisation du dispositif de prélèvement 1.

Dans cet exemple, le manche 2 s'étend selon un axe longitudinal non rectiligne, comme on peut le voir notamment sur la figure 7. Le dispositif 1 peut être réalisé d'une seule pièce par moulage d'une matière plastique, notamment par moulage par injection.

Le manche 2 peut être moulé avec une section transversale pleine, notamment à mi-longueur, et un vide peut se former au sein du manche lors du refroidissement de la matière plastique, comme illustré à la figure 11, ce qui peut avoir pour effet d'alléger le dispositif 1.

Dans cet exemple, le cadre 13 présente un rebord 90 qui s'étend sur tout le pourtour intérieur du cadre 13 dans l'exemple considéré.

Le volet 14 peut présenter sur son bord distal un léger renfoncement 91 qui peut faciliter le franchissement du bord d'attaque 21 du cadre 13 qui sert de butée au volet 14 dans une position où sa surface 24 vient sensiblement à affleurement du bord du cadre 13 afin de définir un volume de cavité sensiblement nul.

Le dispositif 1 peut présenter des inscriptions à proximité des cuillères doseuses 6 et 4 afin de faciliter l'utilisation du dispositif 1.

Dans l'exemple considéré, le cadre 13 se raccorde à deux ailes 92 qui sont reliées par un dos 93 afin de définir un vide qui peut par exemple permettre à l'utilisateur d'appuyer plus facilement sur la face inférieure 35 du volet 14 pour amener celui-ci de la première position à la deuxième position. Le vide porte la référence 94 comme on peut le voir sur la figure 9.

On peut voir également que dans cet exemple, la partie du dispositif 1 qui comporte la cuillère doseuse 4 fait un angle α avec l'axe de la partie du dispositif 1 qui contient la cuillère 6. Cet angle α est par exemple de l'ordre de 7,5°.

La course totale en pivotement du volet 14 entre les première et deuxième positions est l'angle β, de l'ordre de 39°.

Le dispositif 1 peut être moulé avec le volet 14 dans la position illustrée à la figure 8, celui-ci faisant par exemple un angle γ de 60° avec la deuxième position du volet 14.

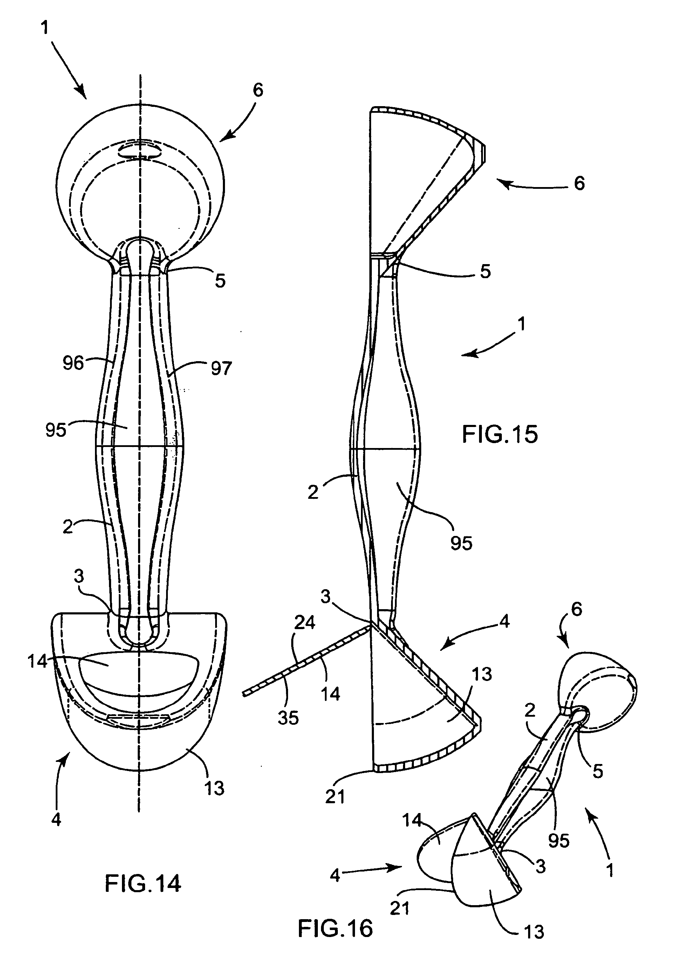

L'exemple des figures 14 à 16 diffère essentiellement des exemples qui viennent d'être décrits par le fait que le manche 2 est réalisé avec un évidement 95 sur une partie de sa longueur, cet évidement débouchant d'un côté du manche 2. Cela permet d'alléger encore le dispositif 1 et de diminuer la quantité de matière utilisée.

Les cuillères doseuses 4 ou 6 peuvent être réalisées avec des formes différentes.

Dans l'exemple considéré, la cuillère doseuse 6 a par exemple une ouverture de section sensiblement circulaire.

L'évidement 95 peut être formé entre deux ailes 96 et 97 qui présentent un écartement variable lorsque l'on se déplace selon l'axe longitudinal du dispositif, cet écartement passant par exemple par un maximum sensiblement à mi-longueur du manche 2, comme illustré sur les figures 14 et 16.

Bien entendu, l'invention n'est pas limitée aux exemples de mise en oeuvre qui viennent d'être décrits.

Par exemple, les portions 8 et 9 du manche 2 sur la figure 3 peuvent être reliées entre elles par une charnière film non pas sur leur côté longitudinal mais à une extrémité du manche 2.

Le manche 2 peut être réalisé autrement, et être plein par exemple.

Le volet peut être relié au manche ou au cadre autrement que par une charnière film, l'articulation faisant par exemple intervenir un axe rapporté.

L'expression « comportant un » doit être comprise comme étant synonyme de « comportant au moins un », sauf si le contraire est spécifié.

## Revendications

1. Dispositif de prélèvement (1 ; 40) d'un produit comportant au moins une cuillère doseuse (4 ; 41), laquelle comporte :
- un cadre (13 ; 42),
- un volet (14) pivotant relativement au cadre, définissant avec celui-ci, dans une première position, le fond d'une cavité (15) servant au prélèvement du produit,
le cadre étant agencé de manière à permettre à un utilisateur d'exercer une poussée sur le volet du côté opposé à la cavité afin d'en diminuer le volume jusqu'à ce que le volet atteigne une deuxième position ledit dispositif étant **caractérisé en ce que** dans ladite deuxième position le volume de la cavité est sensiblement nul.

2. Dispositif selon la revendication précédente, le volet (14) présentant une face (24) sensiblement plane en regard de la cavité (15) dans la première position.

3. Dispositif selon l'une des deux revendications précédentes, le volet (14) pivotant relativement au cadre autour d'un axe de pivotement (Y), le cadre présentant une surface intérieure (20) ayant une forme de révolution autour de l'axe de pivotement (Y), notamment une forme de secteur cylindrique de génératrice parallèle à l'axe de pivotement et de directrice en arc de cercle centré sur l'axe de pivotement.

4. Dispositif selon l'une quelconque des revendications précédentes, le volet (14) occupant sensiblement toute la section intérieure du cadre (13) entre les première et deuxième positions.

5. Dispositif selon l'une quelconque des revendications précédentes, le volet présentant un bord libre (23) dont une portion au moins s'applique sur le cadre (13) entre les première et deuxième positions.

6. Dispositif selon la revendication précédente, la portion s'appliquant sur le cadre s'étendant au moins du côté du volet opposé à l'axe de pivotement (Y).

7. Dispositif selon l'une des deux revendications précédentes, le bord libre (23) du volet (14) comportant deux portions latérales s'appliquant sur le cadre (13) lorsque le volet est entre les première et deuxième positions.

8. Dispositif selon l'une quelconque des revendications précédentes, le volet (14) présentant une forme sensiblement rectangulaire en vue de face.

9. Dispositif selon l'une quelconque des revendications précédentes, comportant un manche, le volet (14) étant relié au manche par une charnière film (16).

10. Dispositif selon l'une quelconque des revendications précédentes, le cadre (13) étant ajouré.

11. Dispositif selon l'une quelconque des revendications précédentes, le cadre étant réalisé en un unique matériau.

12. Dispositif selon l'une quelconque des revendications précédentes, étant réalisé entièrement en un unique matériau.

13. Dispositif selon l'une quelconque des revendications 1 à 9, le cadre (42) étant fermé inférieurement par une membrane élastiquement déformable (44).

14. Dispositif selon la revendication précédente, le cadre comportant deux ailes reliées par une paroi distale (19), la membrane élastiquement déformable (44) définissant au moins la portion inférieure de chacune des ailes.

15. Dispositif selon l'une des deux revendications précédentes, la membrane élastiquement déformable (44) étant réalisée par surmoulage sur une portion rigide du cadre, notamment par surmoulage d'un élastomère.

16. Dispositif selon l'une quelconque des revendications précédentes, le cadre étant agencé de manière à ce que le volet pivote d'un angle compris entre 30° et 50° lorsqu'il passe de la première position à la deuxième position.

17. Dispositif selon l'une quelconque des revendications précédentes, le cadre (13) comportant au moins une butée (30 ; 31) sur laquelle le volet (14) s'applique lorsque celui-ci est dans l'une des première et deuxième positions.

18. Dispositif selon la revendication 17, le cadre comportant au moins une butée (31) pour empêcher le volet de pivoter au-delà de la deuxième position, en éloignement de la première position.

19. Dispositif selon l'une quelconque des revendications précédentes, le volet étant réalisé par moulage de matière d'un seul tenant avec l'un au moins du cadre et d'un manche (2) du dispositif.

20. Dispositif selon l'une quelconque des revendications précédentes, comportant un manche (2) creux ayant un axe longitudinal (X).

21. Dispositif selon la revendication 20, le manche (2) comportant deux portions (8, 9) assemblées l'une sur l'autre.

22. Dispositif selon la revendication précédente, les deux portions (8, 9) étant reliées entre elles par une charnière film (10).

23. Dispositif selon la revendication précédente, le manche comportant un revêtement (53) d'un matériau surmoulé sur les deux portions (8, 9) du manche, ce revêtement contribuant à les maintenir assemblées.

24. Dispositif selon l'une quelconque des revendications précédentes, la cuillère doseuse (4) étant disposée à une première extrémité d'un manche du dispositif, celui-ci comportant en outre, à une deuxième extrémité opposée à la première, une autre cuillère (6).

25. Ensemble comportant :
- un produit non alimentaire, notamment cosmétique, tel qu'une pâte de décoloration,
- un dispositif selon l'une quelconque des revendications précédentes.

26. Procédé de fabrication d'un dispositif selon l'une quelconque des revendications 1 à 24, comportant l'étape suivante :
- réaliser par moulage le volet et au moins une portion du cadre, le volet étant moulé dans une configuration où il s'étend à l'extérieur du cadre.

27. Procédé pour prélever un produit, notamment pâteux, le procédé comportant les étapes suivantes :
- prélever le produit à l'aide d'un dispositif de prélèvement selon l'une quelconque des revendications 1 à 24,
- faire pivoter le volet vers la deuxième position en vue d'extraire le produit de la cuillère.

## Claims

1. A portion-taker device (1; 40) for taking a substance, the device including at least one measuring scoop (4; 41), which scoop comprises:
• a frame (13; 42); and
• a flap (14) mounted to pivot relative to the frame and co-operating with it to define, in a first position, the bottom of a cavity (15) that is used for taking the substance;
the frame being arranged in such a manner as to enable a user to exert thrust on the flap on its side opposite from the cavity so as to reduce the volume thereof until the flap reaches a second position, said device being **characterized in that** in said second position the volume of the cavity is substantially zero.

2. A device according to the preceding claim, the flap (14) presenting a substantially plane face (24) facing the cavity (15) when in the first position.

3. A device according to either one of the two preceding claims, the flap (14) pivoting relative to the frame about a pivot axis (Y), the frame presenting an inside surface (20) that is circularly symmetrical about the pivot axis (Y), in particular in the form of a cylindrical sector having a generator line parallel to the pivot axis and a circularly arcuate director line centered on the pivot axis.

4. A device according to any preceding claim, the flap (14) occupying substantially the entire inside section of the frame (13) between the first and second positions.

5. A device according to any preceding claim, the flap presenting a free edge (23) having at least a portion that presses against the frame (13) between the first and second positions.

6. A device according to the preceding claim, the portion that presses against the frame extending at least from the side of the flap that is opposite from the pivot axis (Y)

7. A device according to either one of the two preceding claims, the free edge (23) of the flap (14) having two side portions that press against the frame (13) when the flap is between the first and second positions.

8. A device according to any preceding claim, the flap (14) presenting a shape that is substantially rectangular in face view.

9. A device according to any preceding claim, including a handle, the flap (14) being connected to the handle by a film hinge (16).

10. A device according to any preceding claim, the frame (13) including an opening.

11. A device according to any preceding claim, the frame being made of a single material.

12. A device according to any preceding claim, the device being made entirely out of a single material.

13. A device according to any one of claims 1 to 9, the frame (42) being closed at the bottom by an elastically deformable membrane (44)

14. A device according to the preceding claim, the frame comprising two cheeks interconnected by a distal wall (19), the elastically deformable membrane (44) defining at least the bottom portion of each of the cheeks.

15. A device according to either one of the two preceding claims, the elastically deformable membrane (44) being made by being overmolded on a rigid portion of the frame, in particular by overmolding an elastomer.

16. A device according to any preceding claim, the frame being arranged in such a manner that the flap pivots through an angle lying in the range 30° to 50° on passing from the first position to the second position.

17. A device according to any preceding claim, the frame (13) including at least one abutment (30; 31) against which the flap (14) bears when it is in one of its first and second positions.

18. A device according to claim 17, the frame including at least one abutment (31) for preventing the flap from pivoting beyond of the second position, away from the first position.

19. The device according to any preceding claim, the flap being made by molding material integrally with at least one of the frame and a handle (2) of the device.

20. A device according to any preceding claim, including a hollow handle (2) having a longitudinal axis (X)

21. A device according to claim 20, the handle (2) comprising two portions (8, 9) that are assembled to each other.

22. A device according to the preceding claim, the two portions (8, 9) being interconnected by a film hinge (10).

23. A device according to the preceding claim, the handle including a coating (53) of a material overmolded on the two portions (8, 9) of the handle, the coating contributing to holding them together.

24. A device according to any preceding claim, the measuring scoop (4) being disposed at a first end of a handle of the device, the device also having another scoop (6) at a second end opposite from the first.

25. A kit comprising:
• a non-food substance, in particular a cosmetic, such as a bleaching paste; and
• a device according to any preceding claim.

26. A method of fabricating a device according to any one of claims 1 to 24, the method including the following step:
• molding the flap and at least a portion of the frame, the flap being molded in a configuration in which it extends outside the frame.

27. A method of taking a portion of a substance, in particular a paste, the method comprising the following steps:
• taking the portion of the substance by using a portion-taker device according to any one of claims 1 to 24; and
• causing the flap to pivot towards the second position in order to extract the substance from the scoop.

## Patentansprüche

1. Vorrichtung zur Entnahme (1 ; 40) eines Produktes, die zumindest einen Dosierlöffel bzw. -kelte (4; 41) aufweist, die aufweist,
- einen Rahmen (13; 42),
- eine Klappe bzw. Verschlussklappe (14), die relativ zu dem Rahmen schwenkbar ist und mit diesem in einer ersten Stellung den Boden eines Hohlraums (15), der zur Entnahme des Produkts dient, definiert, wobei die Klappe bzw. Verschlussklappe in der Weise angeordnet ist, um es einem Benutzer zu ermöglichen, einen Druck auf die Klappe bzw. Verschlussklappe von der Seite gegenüber dem Hohlraum auszuüben, um das Volumen zu verringern, bis die Klappe bzw. Verschlussklappe eine zweite Stellung erreicht, wobei die Vorrichtung **dadurch gekennzeichnet ist, dass** in der zweiten Stellung das Volumen des Hohlraumes genau 0 ist.

2. Vorrichtung nach dem voranstehenden Anspruch, wobei die Klappe (14) eine Fläche (24) vorgibt, die genau eben im Hinblick auf den Hohlraum (15) in der ersten Stellung ist.

3. Vorrichtung nach einem der zwei voranstehenden Ansprüche, wobei die Klappe (14) im Verhältnis zum Rahmen um eine Dreh- bzw. Schwenkachse (Y) schwenkbar ist, wobei der Rahmen eine innere Oberfläche (20) vorgibt, die eine Rotationsform um die Schwenkachse (Y) hat, insbesondere eine Form eines Zylindersegments mit einer parallelen Erzeugenden zu der Schwenkachse und in der Richtung eines Kreisbogens, der um die Schwenkachse zentriert ist.

4. Vorrichtung nach irgendeinem der voranstehenden Ansprüche, wobei die Klappe (14) genau den inneren Abschnitt des Rahmens (13) zwischen der ersten und der zweiten Stellung besetzt.

5. Vorrichtung nach irgendeinem der voranstehenden Ansprüche, wobei die Klappe einen freien Rand (23) aufweist, von dem zumindest ein Anteil auf dem Rahmen (13) zwischen der ersten und der zweiten Stellung anliegt.

6. Vorrichtung nach dem voranstehenden Anspruch, wobei der Anteil, der auf dem Rahmen anliegt, sich zumindest von der Seite der Klappe gegenüber der Schwenkachse (Y) erstreckt.

7. Vorrichtung nach einem der zwei voranstehenden Ansprüche, wobei der freie Rand (23) der Klappe bzw. Verschlussklappe (14) zwei laterale Anteile aufweist, die auf dem Rahmen (13) anliegen, wenn die Klappe bzw. Verschlussklappe zwischen der ersten und der zweiten Stellung ist.

8. Vorrichtung nach irgendeinem der voranstehenden Ansprüche, wobei die Klappe (14) eine Form vorzuweisen hat, die in der Vorderansicht genau rechtwinklig ist.

9. Vorrichtung nach irgendeinem der voranstehenden Ansprüche, die einen Halter bzw. Griff aufweist, wobei die Klappe (14) an dem Halter über ein Filmscharnier (16) abgestützt ist.

10. Vorrichtung nach irgendeinem der voranstehenden Ansprüche, wobei der Rahmen (13) durchbrochen ist.

11. Vorrichtung nach irgendeinem der voranstehenden Ansprüche, wobei der Rahmen aus einem einzigen Material verwirklicht ist.

12. Vorrichtung nach irgendeinem der voranstehenden Ansprüche, die insgesamt aus einem einzigen Material verwirklicht ist.

13. Vorrichtung nach irgendeinem der Ansprüche 1 bis 9, wobei der Rahmen (42) unten durch eine elastisch verformbare Membran (44) verschlossen ist.

14. Vorrichtung nach dem voranstehenden Anspruch, wobei der Rahmen zwei Schenkel aufweist, die durch eine distale Wand bzw. Zwischenwand (19) verbunden sind, wobei die elastisch verformbare Membran (44) zumindest den unteren Anteil von jedem der Schenkel bestimmt.

15. Vorrichtung nach einem der zwei voranstehenden Ansprüche, wobei die elastisch verformbare Membran (44) durch Abformen vom Formstück auf einem starren Anteil des Rahmens, insbesondere durch Abformen von einem Formstück mit einem Elastomer hergestellt ist.

16. Vorrichtung nach einem der voranstehenden Ansprüche, wobei der Rahmen in der Weise angeordnet ist, in der die Klappe um einen Winkel schwenkt, der zwischen 30° und 50° liegt, wenn sie von der ersten Stellung in die zweite Stellung geht.

17. Vorrichtung nach irgendeinem der voranstehenden Ansprüche, wobei der Rahmen (13) zumindest einen Anschlag (30; 31) aufweist, auf dem die Klappe (14) anliegt, wenn diese in einer von der ersten und der zweiten Stellung ist.

18. Vorrichtung nach irgendeinem der voranstehenden Ansprüche, wobei der Rahmen zumindest einen Anschlag (31) aufweist, um die Klappe bzw. Verschlussklappe daran zu hindern, beim Entfernen von der ersten Stellung jenseits von der zweiten Stellung zu schwenken.

19. Vorrichtung nach irgendeinem der voranstehenden Ansprüche, wobei die Klappe durch Formung von einem Material aus einem einzigen Stück mit zumindest einem von dem Rahmen und der Halterung (2) der Vorrichtung hergestellt ist.

20. Vorrichtung nach irgendeinem der voranstehenden Ansprüche, die eine hohle Halterung (2) aufweist, die eine Längsachse (X) hat.

21. Vorrichtung nach Anspruch 20, wobei die Halterung (2) zwei Anteile (8, 9) aufweist, die einer auf dem anderen angeordnet sind.

22. Vorrichtung nach dem voranstehenden Anspruch, wobei die zwei Anteile (8, 9) miteinander über ein Filmscharnier (10) verbunden sind.

23. Vorrichtung nach dem voranstehenden Anspruch, wobei der Griff bzw. der Halter eine Umkleidung bzw. einen Überzug aus einem ausgegossenen Material auf den zwei Anteilen (8, 9) des Griffes bzw. des Halters aufweist, wobei die Auskleidung bzw. der Überzug dazu beiträgt, diese zusammengefügt festzuhalten.

24. Vorrichtung nach irgendeinem dem voranstehenden Ansprüche, wobei der Dosierlöffel bzw. kelle (4) an einem ersten Ende von dem Griff bzw. des Halters der Vorrichtung angeordnet ist, wobei diese außerdem an einem zweiten Ende, das dem ersten gegenüberliegt, einen anderen Löffel bzw. Kelle (6) aufweist.

25. Anordnung, die aufweist:
- ein Produkt, das kein Nahrungsmittel, insbesondere kosmetisch ist, wie etwa eine Paste zur Entfärbung,
- eine Vorrichtung nach irgendeinem der voranstehenden Ansprüche.

26. Verfahren zur Herstellung einer Vorrichtung nach irgendeinem der Ansprüche 1 bis 24, das die folgenden Schritte aufweist:
- durch Formung werden die Klappe bzw. Verschlussklappe und zumindest ein Abschnitt des Rahmens hergestellt, wobei die Klappe in einer Konfiguration geformt wird, in welcher sie sich von dem Rahmen nach außen erstreckt.

27. Verfahren zur Entnahme eines Produktes, insbesondere einer Paste, wobei das Verfahren die folgenden Schritte aufweist:
- Entnehmen des Produktes mit Hilfe einer Vorrichtung zur Entnahme nach irgendeinem der Ansprüche 1 bis 24,
- Schwenken der Klappe bzw. Verschlussklappe in Richtung der zweiten Stellung, um das Produkt von bzw. aus dem Löffel bzw. der Kelle zu entnehmen.
